(19) Europäisches Patentamt

European Patent Office

Office européen des brevets

(11) Veröffentlichungsnummer: 0 128 493
A1

## (12) EUROPÄISCHE PATENTANMELDUNG

(21) Anmeldenummer: 84106327.4

(22) Anmeldetag: 02.06.84

(51) Int. Cl.³: B 62 D 55/20

(30) Priorität: 11.06.83 DE 3321152

(43) Veröffentlichungstag der Anmeldung: 19.12.84
Patentblatt 84/51

(84) Benannte Vertragsstaaten: BE DE FR GB IT SE

(71) Anmelder: Parker-Prädifa GmbH,
Arnold-Jäger-Strasse 1, D-7120 Bietigheim-Bissingen
(DE)

(72) Erfinder: Hörl, Ernst, Ing.(grad.), Woifsbergweg 37,
D-7121 Freudental (DE)

(74) Vertreter: Wolff, Michael, Dipl.-Phys., Kirchheimer
Strasse 69, D-7000 Stuttgart 75 (DE)

(54) Dichtung für Spurkettengelenke von Kettenfahrzeugen.

(57) Um bei einer solchen aus einem weicheren Vollring (50) und aus einem härteren Flanschring (52) bestehenden Dichtung deren Federweg zu verbessern und das Passieren von Schmiermittel und/oder Schmutz zu verhindern, wird vorgeschlagen, daß der Vollring (50) zwischen der Grundfläche (36) einer die Dichtung aufnehmenden Vertiefung (12) in einer an der Gelenkbildung beteiligten Kettenlasche (18) und einem an der der Grundfläche (36) gegenüberliegenden Laschen-Stirnfläche (42) anliegenden Flanschring (52)-Flansch (64) axial eingespannt sei, welcher mit einer von einer einen Gelenkbolzen (22) umfahrenden Ringnut (66) unterteilten Stirnfläche (68) an der Laschen-Stirnfläche (42) breit anliegt; und daß der Vollring (50) mittels eines an der ringförmigen Begrenzungsfläche (40) der Vertiefung (12) anliegenden Flanschring (52)-Flansches (62) radial außen gestützt werde, wobei der Flanschring (52) ein im wesentlichen L-förmiges Profil und einen geringen Abstand zur Grundfläche (36) der Vertiefung (12) aufweist sowie einen Preßsitz in der zylindrischen Begrenzungsfläche (40) der Vertiefung (10) einnimmt.

Die Erfindung betrifft eine Dichtung für Spurkettengelenke an Kettenfahrzeugen, bei denen vier paarweise nebeneinander angeordnete, sich paarweise überlappende Kettenlaschen sowie eine die im Überlappungsbereich axial innenliegenden Laschenenden fest verbindende Kettenhülse und ein die im Überlappungsbereich axial außenliegenden Kettenglieder fest verbindender, koaxialer Kettenbolzen ein Kettengelenk bilden, das aus einer mit Schmiermittel füllbaren Bohrung im Bolzen über eine radiale Bohrung im Bolzen schmierbar ist, wobei jede im Überlappungsbereich außenliegende Lasche auf ihrer Innenseite eine kreiszylindrische Vertiefung zur Aufnahme der Dichtung und eines auf dem aus der Hülse herausragenden Bolzenende sitzenden starren Distanzringes aufweist, wobei der in einer radialen Ebene liegenden Grundfläche der Vertiefung eine in einer parallelen Ebene liegende Stirnfläche der der Vertiefung benachbarten Lasche gegenüberliegt und wobei sich überlappende Laschen einen Ringspalt bilden, der den von der Vertiefung und der ihr axial gegenüberliegenden Stirnfläche begrenzten Hohlraum öffnet; Dichtung, bestehend aus einem gegen eine Begrenzungsfläche der Veriefung statisch dichtenden, weicheren Vollring und aus einem härteren, verschleißfesteren Flanschring, der an der ringförmigen, koaxialen Begrenzungsfläche der Vertiefung anliegt und gegen die der Vertiefung axial gegenüberliegende Stirnfläche bei der Gelenkbeanspruchung dynamisch dichtet, wobei der Flanschring den Vollring axial sowie radial stützt und zwischen jedem dieser Ringe einerseits sowie dem Distanzring andererseits ein Abstand vorhanden ist.

Bei den aus der DE-PS 22 05 533 und der US-PS 3 336 086 bekannten Dichtungen dieser Art besitzt der Flanschring ein im wesentlichen U-förmiges Profil mit im wesentlichen parallelen Schenkeln, die durch zwei ringförmige Flansche gebildet sind, von denen der axial innere eine umlaufende dynamische Dichtkante aufweist, die sich unter axialer Pressung zu einer schmalen, ringförmigen Dichtfläche verformt, und von denen

...

der axial innere Flansch nach dem Einbau des Flanschringes in die ringförmige Ecke am Grund der die Dichtung aufnehmenden Vertiefung gepreßt ist. Das die Profilschenkel des Flanschringes verbindende Profiljoch ist durch einen schmaleren beziehungsweise breiteren radial inneren Ring gebildet, an den die Flansche angeformt sind und welcher zwischen dem Vollring einerseits und dem starren Distanzring andererseits angeordnet ist, der ein loses Einzelteil beziehungsweise einen an das im Überlappungsbereich axial innenliegende Kettenglied angeformten Bestandteil desselben bildet. Der Vollring befindet sich zwischen den beiden Flanschen des Flanschringes, dessen von den Flanschen gebildete Ringnut er vollständig beziehungsweise teilweise ausfüllt, und wird deshalb vom Flanschring gegen die ringförmige koaxiale Begrenzungsfläche der Vertiefung gepreßt.

Mit den zwei bekannten Dichtungen soll das Problem beseitigt sein, gleichzeitig das Austreten des Schmiermittels durch den Ringspalt in einer Richtung und das Eintreten von Schmutz durch den Ringspalt in der entgegengesetzten Richtung zu verhindern. Dabei ist aber auch bei einer gelenkigen Verbindung der beiden Flansche des Flanschringes und bei einer vollständigen Ausfüllung der Ringnut des Flanschringes mittels des Vollringes nachteilig, daß die dynamische Dichtkante am axial äußeren Flansch des Flanschringes nur eine schmale Dichtfläche ergibt, die zu klein ist, als daß sie zuverlässig den Austritt von Schmiermittel und den Eintritt von Schmutz verhindern könnte. Tatsächlich hat sich an in der Praxis erprobten Dichtungen der in Rede stehenden Art gezeigt, daß in das Kunststoffmaterial des Flanschringes in den Bereich der Dichtfläche eingewanderte Körner, zum Beispiel aus Sand, in diese Dichtfläche eingebettet wurden und den anliegenden Teil der gegenüberliegenden metallischen Stirnfläche beschädigt haben. An den zwei bekannten Dichtungen ist außerdem nachteilig, daß die Größe und Form der Querschnittsfläche des belasteten gummielastischen

...

Vollringes und dessen Anordnung nicht hinreichen, um der Dichtung diejenige axiale Elastizität zu geben, welche sie benötigt, um Toleranzen bei der Fertigung der Kettenlaschen auszugleichen, um axialen Beanspruchungen in allen Fällen zu genügen und um durch eine flache Federkennlinie einen möglichst konstanten Druck zu gewährleisten, mit dem sich die schmale Dichtfläche des Flanschringes und die benachbarte Stirnfläche einer Kettenlasche gegenseitig berühren.

Der Erfindung liegt daher die Aufgabe zugrunde, eine Dichtung für Spurkettengelenke an Kettenfahrzeugen ohne die genannten Nachteile zu schaffen, welche das erwähnte Problem des Stoffaustausches mit Sicherheit beseitigt und den Federweg der Dichtung verbessert.

Diese Aufgabe ist bei einer Dichtung der eingangs genannten Art erfindungsgemäß dadurch gelöst, daß der Vollring zwischen der Grundfläche der Vertiefung und einem an der der Grundfläche gegenüberliegenden Laschen-Stirnfläche anliegenden Flanschring-Flansch axial eingespannt ist, welcher mit einer von einer den Bolzen umfahrenden Ringnut unterteilten Stirnfläche an der Laschen-Stirnfläche breit anliegt, und daß der Vollring mittels eines an der ringförmigen Begrenzungsfläche der Vertiefung anliegenden Flanschring-Flansches radial außen gestützt ist, wobei der Flanschring ein im wesentlichen L-förmiges Profil und einen geringen Abstand zur Grundfläche der Vertiefung aufweist.[+] Vorteilhafterweise wird dadurch erreicht, daß die radiale Verbreiterung der dynamischen Dichtfläche und deren Unterteilung mittels der Ringnut eine radial äußere Berührungsfläche, in die ohne die Gefahr der Leckage Schmutz eindringen kann, in Gestalt der Ringnut ein Sammelbecken für Schmutz und/oder ein Reservoir für Schmiermittel sowie eine radial innere Berührungsfläche als eigentliche dynamische Dichtfläche schaffen; und daß die unter Wegfall des axial inneren Flansches des Flansch-...

[+] sowie einen Preßsitz in der zylindrischen Begrenzungsfläche der Vertiefung einnimmt.

ringes erfolgte axiale Ausdehnung des Vollringes bis zur Grundfläche der Vertiefung und die Umwandlung des radial inneren Ringes des Flanschringes in einen radial äußeren Ring das Volumen des Vollringes vergrößert und diesen erst richtig zum Einsatz bringt, woran ihn bisher der weggefallene Flansch des Flanschringes gehindert hat.

Bei einer bevorzugten Ausführungsform der erfindungsgemäßen Dichtung ist das Profil des Vollringes im wesentlichen ein Rechteck, dessen längere Mittellinie achsparallel verläuft, so daß der Federweg hauptsächlich achsparallel ausgerichtet ist. Bei der bevorzugten Ausführungsform ist der L-förmige Flanschring an der von seinen zwei Flanschen gebildeten äußeren Ecke mit einer dem Ringspalt zugewandten Ausnehmung versehen, damit durch den Ringspalt auf diese Ecke eindringender Schmutz nicht den Dichtflächen zugeleitet wird. Zweckmäßigerweise sind bei der bevorzugten Ausführungsform Außen- und Innenecken des Vollringes und des Flanschringes je abgeschrägt beziehungsweise ausgefüllt, so daß Kerbwirkungen auf das Material nicht eintreten können.

...

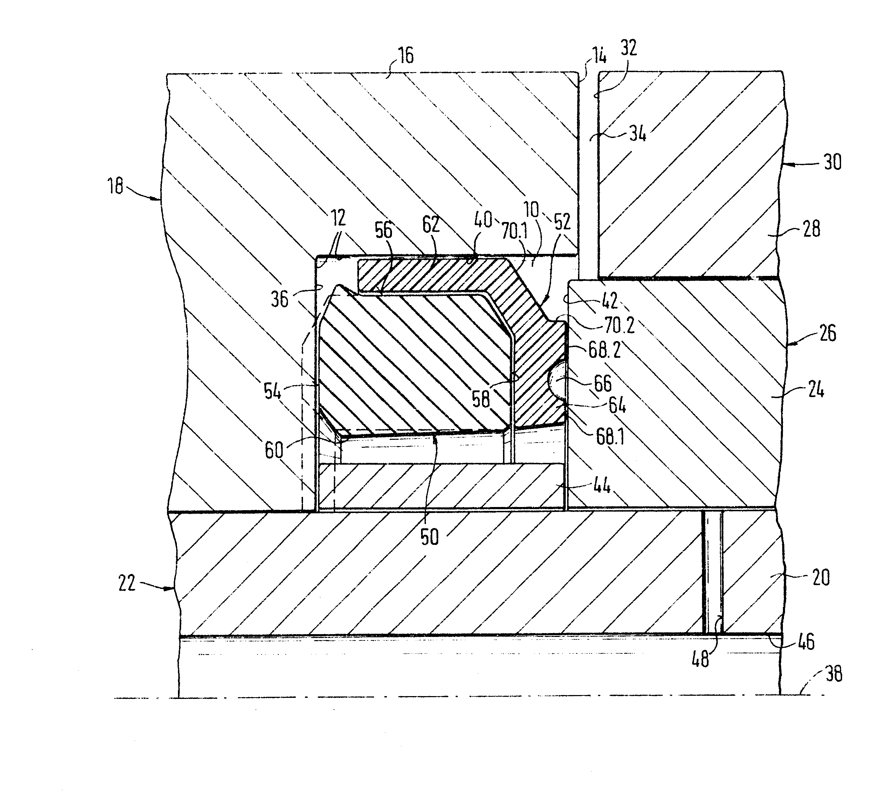

Im folgenden ist die Erfindung anhand der durch die Zeichnung beispielhaft dargestellten bevorzugten Ausführungsform der erfindungsgemäßen Dichtung in Verbindung mit einer schematischen Darstellung ihres Einbauraumes im einzelnen erläutert. Die einzige Figur der Zeichnung zeigt einen axialen Längsschnitt durch die in ihrem Einbauraum sitzende Dichtung, wobei die gestrichelten Linien das Profil der entlasteten Dichtung wiedergeben.

Die erfindungsgemäße Dichtung ist zum Einbau in einen kreisringförmigen Hohlraum bestimmt und geeignet, welcher annähernd mit einer kreiszylindrischen Vertiefung 12 der axial inneren Stirnfläche 14 des axial äußeren Endes 16 einer Kettenlasche 18 übereinstimmt, welches unter Preßpassung auf einem Ende 20 eines Kettenbolzens 22 festsitzt, der mit seinem Ende 20 aus einem Ende 24 einer Kettenhülse 26 herausragt, in welcher sich der Bolzen unter Gleitpassung dreht. Das Hülsenende 24 selbst sitzt unter Preßpassung fest auf dem axial inneren Ende 28 einer anderen Kettenlasche 30, welches eine axial äußere Stirnfläche 32 aufweist, die mit der Stirnfläche 14 einen in die Vertiefung 12 und damit in den Hohlraum 10 mündenden Ringspalt 34 bildet.

Die Vertiefung 12 ist axial nach außen durch eine ebene, ringförmige Grundfläche 36, radial nach außen durch eine ringförmige, bezüglich der Achse 38 des Bolzens 22 koaxiale Umfangsfläche 40 und radial nach innen durch den Bolzen selbst begrenzt. Der kleinere Hohlraum 10 ist ebenfalls durch die Grundfläche 36 und die Umfangsfläche 40 sowie durch die schon in der Vertiefung 12 liegende axial äußere Stirnfläche 42 des Hülsenendes 24 und durch einen kreiszylindrischen Distanzring 44 begrenzt, der beim Aufpressen des Laschenendes 28 und des Laschenendes 16 auf das Hülsenende 24 beziehungsweise auf das Bolzenende 20 einen definierten senkrechten Abstand

...

zwischen den in parallelen,bezüglich der Achse 38 radialen Ebenen liegenden Flächen 36 und 42 einstellt.

Im Ausführungsbeispiel besteht die erfindungsgemäße Dichtung aus einem statisch dichtenden Vollring 50 aus weicherem Material wie Werkstoffen auf Basis Butadien-Acrylnitril-Kautschuk und aus einem dynamisch dichtenden härteren Flanschring 52 aus /Material wie Polyester-Urethan; die genannten Materialien sind Elastomere, die gegen das Schmieröl beständig sind, welches sich im Spalt zwischen Hülse 26 und Bolzen 22 befindet und dorthin aus einer an ihren Enden zugestopften,ölgefüllten,zentralen Bohrung 46 im Bolzen durch wenigstens eine radiale Bohrung 48 gelangt.

verschleißfesterem

Der Vollring 50 weist bezeichnungsgemäß einen massiven Querschnitt auf, dessen Fläche im wesentlichen ein Rechteck bildet, dessen längere Mittellinie achsparallel verläuft. Drei der vier umlaufenden Ecken des Vollringes 50 sind mit je einer durch Abschrägung entstandenen größeren Ausnehmung versehen, während die radial und axial innere Ringecke nur mit einer kleinen Phase versehen ist. Im Zustand der Einspannung liegt der Vollring 50 mit einer breiten Dichtfläche 54 an der Grundfläche 36 sowie mit dem größten Teil seiner radial äußeren Umfangsfläche 56 und seiner axial inneren Stirnfläche 58 am Flanschring 52 an, während seine radial innere Umfangsfläche 60 den Distanzring 44 nicht berührt.

Der Flanschring 52 besitzt ein im Querschnitt ungefähr L-förmiges Profil und weist zwei zueinander rechtwinklige umlaufende Flansche 62 und 64 mit ungefähr rechteckigem Querschnitt auf. Der schmalere Flansch 62 liegt einerseits an der Umfangsfläche 56 des Vollringes 50 und andererseits an der Umfangsfläche 40 der Vertiefung 12 an.° Der breitere Flansch 64 weist eine umlaufende, im Querschnitt halbkreisförmige Ringnut 66 auf, die durch die Stirnfläche 42 des ···

° ,wobei je ein radial äußeres Übermaß des entlasteten Ringes 50 bzw. 52 für Haftreibschluß zum radial äußeren Ringflansch 62 bzw. zur zylindrischen Umfangsfläche 40 sorgt.

100683

Bolzenendes 24 bedeckt ist und die anliegende ebene Stirnfläche 68 des Flansches 64 in eine radial innere Teilfläche 68.1 und eine radial äußere Teilfläche 68.2 unterteilt. Der Flansch 64 hält ungefähr den gleichen radialen Abstand zum Distanzring 44 wie der Vollring 50, dessen längere Mittellinie das Kreisprofil der Ringnut 66 ungefähr tangiert. Infolgedessen ist die radiale Breite der Teilfläche 68.2 größer als diejenige der Teilfläche 68.1.

Der Flansch 62 des Flanschringes 52 endet in einem solchen Abstand von der Grundfläche 36, daß sich der Vollring 50 bei axialer Pressung in den Zwischenraum ausdehnen kann und dieser Flansch 62 keinesfalls die Grundfläche 36 berührt.

Die von seinen beiden Flanschen 62 und 64 gebildete äußere Ecke des L-förmigen Flanschringes 52 ist mit einer gemäß Zeichnung profilierten, dem Ringspalt 34 zugewandten Ausnehmung 70 versehen, die aus einer Schräge 70.1 und aus einer bezüglich der Stirnfläche 68 rechtwinkligen Stufe 70.2 besteht.

In dem durch die Ausnehmung 70 freigelassenen Teilvolumen des Hohlraumes 10 kann sich durch den Ringspalt 34 eingedrungener Schmutz sammeln, der schlimmstenfalls über die Teilfläche 68.2 in die Ringnut 66 gelangt, die als Reservoir für Schmieröl dient, das seinen Weg über die Teilfläche 68.1 genommen hat, zu der sich die Stirnfläche 42 des Hülsenendes 24 zeitweilig relativ dreht, während eine Relativbewegung zwischen den Flächen 36 und 54 unter keinen Umständen stattfindet.

Soweit im Vorstehenden nicht von Eckaussparungen und Phasen die Rede war, ist generell anzumerken, daß alle Kanten des Vollringes 50 und insbesondere des Flanschringes 52 durch Abschrägungen beziehungsweise Ausfüllungen entschärft sind.

P a t e n t a n s p r ü c h e

1) Dichtung für Spurkettengelenke an Kettenfahrzeugen, bei denen vier paarweise nebeneinander angeordnete, sich paarweise überlappende Kettenlaschen sowie eine die im Überlappungsbereich axial innenliegenden Laschenenden fest verbindende Kettenhülse und ein die im Überlappungsbereich axial außenliegenden Kettenglieder fest verbindender, koaxialer Kettenbolzen ein Kettengelenk bilden, das aus einer mit Schmiermittel füllbaren Bohrung im Bolzen über eine radiale Bohrung im Bolzen schmierbar ist, wobei jede im Überlappungsbereich außenliegende Lasche auf ihrer Innenseite eine kreiszylindrische Vertiefung zur Aufnahme der Dichtung und eines auf dem aus der Hülse herausragenden Bolzenende sitzenden starren Distanzringes aufweist, wobei der in einer radialen Ebene liegenden Grundfläche der Vertiefung eine in einer parallelen Ebene liegenden Stirnfläche der der Vertiefung benachbarten Lasche gegenüberliegt und wobei zwei sich überlappende Laschen einen Ringspalt bilden, der den von der Vertiefung und der ihr axial gegenüberliegenden Stirnfläche begrenzten Hohlraum öffnet; Dichtung, bestehend aus einem gegen eine Begrenzungsfläche der Vertiefung statisch dichtenden, weicheren Vollring und aus einem härteren, verschleißfesteren Flanschring

• • •

der an der ringförmigen, koaxialen Begrenzungsfläche der Vertiefung anliegt und gegen die der Vertiefung axial gegenüberleigende Stirnfläche bei der Gelenkbeanspruchung dynamisch dichtet, wobei der Flanschring den Vollring axial sowie radial stützt und zwischen jedem dieser Ringe einerseits sowie dem Distanzring andererseits ein Abstand vorhanden ist, dadurch gekennzeichnet, daß der Vollring (50) zwischen der Grundfläche (36) der Vertiefung (12) und einem an der der Grundfläche gegenüberliegenden Laschen-Stirnfläche (42) anliegenden Flanschring (52)-Flansch (64) axial eingespannt ist, welcher mit einer von einer den Bolzen (22) umfahrenden Ringnut (66) unterteilten Stirnfläche (68) an der Laschen-Stirnfläche (42) breit anliegt, und daß der Vollring (50) mittels eines an der ringförmigen Begrenzungsfläche (40) der Vertiefung (12) anliegenden Flanschring (52) -Flansches (62) radial außen gestützt ist, wobei der Flanschring (52) ein im wesentlichen L-förmiges Profil und einen geringen Abstand zur Grundfläche (36) der Vertiefung (12) aufweist sowie einen Preßsitz in der zylindrischen Begrenzungsfläche (40) der Vertiefung (10) einnimmt.

2) Dichtung nach Anspruch 1, dadurch gekennzeichnet, daß das Profil des Vollringes (50) im wesentlichen ein Rechteck ist, dessen längere Mittellinie achsparallel verläuft.

3) Dichtung nach Anspruch 1 oder 2, dadurch gekennzeichnet, daß der L-förmige Flanschring (52) an der von seinen zwei Flanschen (62, 64) gebildeten äußeren Ecke mit einer dem Ringspalt (34) zugewandten Ausnehmung (70) versehen ist.

4) Dichtung nach einem der Ansprüche 1 bis 3, dadurch gekennzeichnet, daß Außen- und Innenecken des Vollringes (50) und des Flanschringes (52) je abgeschrägt beziehungsweise ausgefüllt sind.

-.-

Europäisches
Patentamt

**EUROPÄISCHER RECHERCHENBERICHT**

0128493
Nummer der Anmeldung

EP 84 10 6327

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A,D | DE-A-2 205 533 (CATERPILLAR TRACTOR CO.) <br> * Seite 6, Zeile 16 - Seite 8, Zeile 24; Figuren 1-3 * | 1 | B 62 D 55/20 |
| A | DE-A-2 930 525 (DEERE & CO.) <br> * Anspruch 1; Figur 2 * | 1 | |
| A | DE-A-2 244 408 (KLÖCKNER-HUMBOLDT-DEUTZ AG) | | |
| A | DE-A-2 700 550 (POLYPAC LTD.) | | |
| A,D | US-A-3 336 086 (H.L. REINSMA) | | |
| | | | **RECHERCHIERTE SACHGEBIETE (Int. Cl. 3)** |
| | | | B 62 D 55/00 |

Der vorliegende Recherchenbericht wurde für alle Patentansprüche erstellt.

| Recherchenort | Abschlußdatum der Recherche | Prüfer |
|---|---|---|
| BERLIN | 10-08-1984 | PETTI P |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82